# EUROPÄISCHE PATENTANMELDUNG

(11) **EP 4 535 304 A1**
(43) Veröffentlichungstag der Anmeldung: **09.04.2025**
(21) Anmeldenummer: 24204243.0
(22) Anmeldetag: 02.10.2024
(51) Int. Cl.: G06V 20/52, G06Q 30/0251, G06Q 50/06, G06Q 50/40, G09F 27/00, G09F 19/22, G09F 23/04

(54) **SYSTEM ZUR BESTIMMUNG VON BILDINFORMATIONEN**

(30) Priorität: 05.10.2023 DE 202023105770 U
(71) Anmelder: advercharge GmbH, 57074 Siegen (DE)
(72) Erfinder: GERHARDS, Christoph, 57074 Siegen (DE); ZHOU, Xiang-Qian, 57074 Siegen (DE)
(74) Vertreter: Manitz Finsterwald Patent- und Rechtsanwaltspartnerschaft mbB

(57) **Zusammenfassung**

Die Erfindung betrifft ein System, insbesondere ein Ladesystem bspw. zum Laden eines Elektrofahrzeugs, zur Bestimmung von Bildinformationen. Das System umfasst eine Anzeigeeinheit, eine Aufnahmeeinheit, eine Bildverarbeitungseinheit und einen Controller. Die Anzeigeeinheit ist konfiguriert, um Bildinformationen anzuzeigen. Die Aufnahmeeinheit ist angeordnet und konfiguriert, um Daten in einem Blickfeld der Aufnahmeeinheit, insbesondere vor der Anzeigeeinheit zu erfassen und abzuspeichern. Die Bildverarbeitungseinheit ist konfiguriert, um die Daten der Aufnahmeeinheit zu empfangen und zumindest ein Objekt basierend auf den Daten in dem Blickfeld der Aufnahmeeinheit zu bestimmen. Der Controller ist mit der Anzeigeeinheit, der Aufnahmeeinheit und der Bildverarbeitungseinheit verbunden und dazu konfiguriert, basierend auf dem zumindest einen Objekt die Bildinformationen zu bestimmen und auf der Anzeigeeinheit anzuzeigen.

## Beschreibung

Die Erfindung betrifft ein System, insbesondere ein Ladesystem bspw. zum Laden eines Elektrofahrzeugs, zur Bestimmung von Bildinformationen.

Bildinformationen können auf verschiedenste Weise bestimmt und verwendet werden. So können beispielsweise Bildinformationen mittels neuronaler Netzwerke, Computer Vision oder anderer Systeme ermittelt und zur Steuerung von autonomen oder teilautonomen Fahrzeugen, zur Identifizierung von Fahrzeugen, insbesondere zur Identifizierung einer Marke und/oder eines Models eines Fahrzeugs, oder zur Identifikation von vorbeilaufenden Personen (ohne deren Persönlichkeitsrechte zu verletzen) verwendet werden.

Eine weitere Möglichkeit Bildinformationen zu nutzen ist der Bereich der digitalen und personalisierten Werbung. Digitale Werbung ist ein maßgeblicher Faktor bei den Einnahmen großer Onlineunternehmen. Plattformen wie YouTube oder Google basieren fast ausschließlich auf den Einnahmen aus dieser Quelle. Zudem ist in den letzten Jahren ein stark wachsender Anstieg der Einnahmen durch digitale Werbung festzustellen. Insbesondere ist ein Anstieg im Bereich der personalisierten Werbung, beispielsweise Werbung die auf Bedürfnisse einzelner Personen und deren Verhaltensmuster ausgerichtet ist, zu beobachten.

Personalisierte Werbung ist bisher vor allem als digitale, personenbezogene Werbung aus dem Internet bekannt. Es ist jedoch wünschenswert, personenbezogene Werbung auch auf andere Bereiche auszweiten.

Es ist eine Aufgabe der Erfindung, Systeme zur Bestimmung von Bildinformationen anzugeben, die einen Einsatz von personenbezogenen Interessen im Bereich der digitalen Werbung erlauben.

Die Lösung dieser Aufgabe erfolgt durch ein System, insbesondere ein Ladesystem bspw. zum Laden eines Elektrofahrzeugs mit den Merkmalen der unabhängigen Ansprüche.

Gemäß einem ersten Aspekt der Erfindung umfasst ein System, insbesondere ein Ladesystem bspw. zum Laden eines Elektrofahrzeugs, wie ein LKW, PKW, Elektroroller, Elektrofahrrad, Elektroboot oder ähnliches, zur Bestimmung von Bildinformationen eine Anzeigeeinheit, eine Aufnahmeeinheit, eine Bildverarbeitungseinheit und einen Controller. Die Anzeigeeinheit ist konfiguriert, um Bildinformationen anzuzeigen. Die Aufnahmeeinheit ist angeordnet und konfiguriert, um Daten in einem Blickfeld der Aufnahmeeinheit, insbesondere vor der Anzeigeeinheit zu erfassen und abzuspeichern. Die Bildverarbeitungseinheit ist konfiguriert, um die Daten der Aufnahmeeinheit zu empfangen und zumindest ein Objekt basierend auf den Daten in dem Blickfeld der Aufnahmeeinheit zu bestimmen. Der Controller ist mit der Anzeigeeinheit, der Aufnahmeeinheit und der Bildverarbeitungseinheit verbunden und dazu konfiguriert, basierend auf dem zumindest einen Objekt die Bildinformationen zu bestimmen und auf der Anzeigeeinheit anzuzeigen.

Gemäß einem zweiten Aspekt der Erfindung umfasst ein System, insbesondere ein Ladesystem bspw. zum Laden eines Elektrofahrzeugs, wie ein LKW, PKW, Elektroroller, Elektrofahrrad, Elektroboot oder ähnliches, zur Bestimmung von Bildinformationen eine Anzeigeeinheit, eine Verbindungseinheit, eine Auswerteeinheit und einen Controller. Die Anzeigeeinheit ist konfiguriert, um Bildinformationen anzuzeigen. Die Verbindungseinheit ist konfiguriert, um das System mit einem Objekt zu verbinden und Daten von dem Objekt an das System zu übertragen. Die Auswerteeinheit ist konfiguriert, um die Daten zu empfangen und das Objekt basierend auf den Daten zu bestimmen. Der Controller ist mit der Anzeigeeinheit und der Auswerteeinheit verbunden und dazu konfiguriert, basierend auf dem Objekt die Bildinformationen zu bestimmen und auf der Anzeigeeinheit anzuzeigen.

Das System, insbesondere ein Ladesystem oder eine Ladesäule, weist eine Anzeigeeinheit, beispielsweise einen Bildschirm auf. Mittels der Anzeigeeinheit können einem Benutzer des Ladesystems Bildinformationen angezeigt werden. Die Bildinformationen können beispielsweise wesentliche Informationen bezüglich eines aktuellen Ladevorgangs umfassen. So kann dem Benutzer eine aktuelle Ladedauer, eine während des Ladevorgangs vorhandene Ladeleistung, ein Batteriestatus oder ein Ladestatus der Batterie des an das Ladesystem oder die Ladesäule angeschlossenen Elektrofahrzeugs angezeigt werden. Ferner kann die Anzeigeeinheit als Touch-Display ausgestaltet sein, die es dem Benutzer der Ladesäule erlaubt, mit dem Ladesystem zu interagieren. Beispielsweise kann der Benutzer nach erfolgreicher Registrierung an dem System über das Touch-Display einen gewünschten Ladestecker zum Aufladen seines Elektrofahrzeugs auswählen. Die Bildinformationen können jedoch auch Informationen umfassen, die nicht direkt mit dem Ladevorgang in Zusammenhang stehen. So können dem Benutzer mittels der Anzeigeeinheit beispielsweise Fotos oder Filme angezeigt werden. Die Fotos oder die Filme können Werbung enthalten. Unter Werbung werden in diesem Zusammenhang Informationen, insbesondere Bildinformationen verstanden, die Produkte oder Dienstleistungen von Unternehmen für den Benutzer der Ladesäule bekannt machen sollen oder das Image der Unternehmen, der Produkte oder der Dienstleistungen aufbauen, pflegen oder verbessern sollen, wobei diese Informationen auch Information von Drittanbietern umfassen können.

Die Aufnahmeeinheit kann beispielsweise eine Kamera oder mehrere Kameras umfassen. Die Aufnahmeeinheit kann an dem Ladesystem derart angeordnet sein, um Daten einer Umgebung des Ladesystems zu erfassen, insbesondere um Bilder oder Videos der Umgebung des Ladesystems aufzuzeichnen. Die Bilder können eine Vielzahl von Pixeln umfassen. Die Videos können Bildsequenzen von zeitlich hintereinander aufgezeichneten Bildern umfassen.

Bevorzugt ist die Aufnahmeeinheit derart ausgebildet, um Personen, Fahrzeuge oder sonstige Gegenstände in der Umgebung des Ladesystems zu erkennen und Bilder der Personen, der Fahrzeuge oder der sonstigen Gegenstände aufzuzeichnen. Besonders bevorzugt ist die Aufnahmeeinheit derart an dem Ladesystem angeordnet und ausgebildet, um Personen, Fahrzeuge oder sonstige Gegenstände die sich vor dem Ladesystem befinden oder die sich dem Ladesystem nähern aufzuzeichnen. In diesem Zusammenhang ist unter dem Begriff "vor dem Ladesystem" eine Seite des Ladesystems zu verstehen an der die Anzeigeeinheit an dem Ladesystem angeordnet ist. Folglich kann die Aufnahmeeinheit dazu ausgebildet sein, Personen zu erfassen und aufzuzeichnen, die das Ladesystem oder die Anzeigeeinheit des Ladesystems bedienen.

Ferner können Fahrzeuge, insbesondere Elektrofahrzeuge, von der Aufnahmeeinheit erfasst werden, die sich während eines Ladevorgangs vor dem Ladesystem befinden oder die sich dem Ladesystem annähern, um von dem Benutzer an dem Ladesystem angeschlossen zu werden.

Die Bildverarbeitungseinheit kann die Daten oder die Bilder welche von der Aufnahmeeinheit aufgezeichnet wurden empfangen und auswerten. Beispielsweise kann die Bildverarbeitungseinheit derart konfiguriert sein, um ein Objekt zu bestimmen oder zumindest ein Merkmal des Objekts zu extrahieren, beispielsweise eine Marke und/oder ein Modell eines Fahrzeugs. Das zumindest eine Merkmal der erkannten Objekte oder die Objekte selbst kann/können in einem Objektdatensatz pro erkanntem Objekt in einem internen Speicher oder einem externen Speicher abgespeichert werden.

Das Objekt kann beispielsweise eine Person, ein Fahrzeug oder ein Gegenstand umfassen. Ein Merkmal des Objekts kann ein Nummernschild eines Fahrzeugs oder ein Kennzeichen des Fahrzeugs umfassen, welches sich in dem Blickfeld der Aufnahmeeinheit befindet. Unter dem Blickfeld der Aufnahmeeinheit ist der Bereich der Umgebung des Ladsystems zu verstehen, der mittels der Aufnahmeeinheit erfasst und aufgezeichnet werden kann. Die Bildverarbeitungseinheit kann eine Bilderkennungssoftware umfassen.

Ferner kann das Merkmal des Objekts einen Markenname eines Fahrzeugs, ein Modell eines Fahrzeugs, einen Fahrzeugtyp eines Fahrzeugs, ein Baujahr eines Fahrzeugs, eine Ausstattung eines Fahrzeugs und/oder eine Farbe eines Fahrzeugs umfassen. Der Markenname des Fahrzeugs kann eine Bezeichnung eines Herstellers des Fahrzeugs umfassen. Das Modell des Fahrzeugs kann eine Modellbezeichnung des Fahrzeugs umfassen, wobei die Modellbezeichnung abhängig vom Hersteller des Fahrzeugs sein kann, beispielsweise C220D, 320D, Golf, Corsa, etc. Der Fahrzeugtyp des Fahrzeugs kann beispielsweise eines der folgenden Bezeichnungen umfassen: Limousine, Coupe, Cabrio, SUV (Sports Utility Vehicle), SAV (Sports Activity Vehicle), SAT (Sports Activity Tourer), Hatch, Sedan oder Touring. Der Fahrzeugtyp ist jedoch nicht auf eines dieser Bezeichnungen beschränkt, sondern kann auch Angaben zur Art des Fahrzeugs umfassen, beispielsweise Geländewagen, Kleinwagen, Mittelklassewagen, etc. Das Baujahr kann eine Jahreszahl und/oder eine Kombination einer Monatsangabe mit einer Jahreszahl umfassen, die einen Hinweis auf ein Herstellungsdatum des Fahrzeugs liefert. Die Ausstattung des Fahrzeug kann eine Beschreibung von (Sonder- ) Ausstattungen des Fahrzeugs umfassen, beispielsweise "dritte Sitzreihe", "ISOFIX", etc. Die Farbe des Fahrzeugs kann eine Farbbezeichnung, beispielsweise rot, grün, blau, etc., und/oder einen Farbcode, beispielsweise RAL oder Pantone, umfassen.

Der Controller kann einen Mikroprozessor umfassen. Der Controller oder der Mikroprozessor kann zu einer Identifizierung und/oder zu einer Bearbeitung der von der Bearbeitungseinheit oder der Auswerteeinheit bestimmten Objekte ausgebildet sein. Beispielsweise kann der Controller derart ausgebildet sein, um Objektprofile oder Objektdatensätze mit abgespeicherten Objektdatensätzen zu vergleichen. Der Controller kann ferner dazu ausgebildet sein, basierend auf dem zumindest einen erkannten Objekt die Bildinformationen, insbesondere Werbung, zu bestimmen und auf der Anzeigeeinheit anzuzeigen. Das Bestimmen der Bildinformationen kann basierend auf einer Korrelation eines erkannten Objektdatensatzes mit einem abgespeicherten Objektdatensatz erfolgen.

Die Verbindungseinheit kann ein Ladekabel umfassen. Das Ladekabel kann einen Ladestecker aufweisen, der ausgebildet ist, um das Objekt, insbesondere ein Fahrzeug, mit dem Ladekabel zu verbinden. Die Verbindungseinheit, insbesondere das Ladekabel kann fest mit dem System, insbesondere einer Ladesäule, verbunden sein. Die Übertragung der Daten zwischen dem Objekt und dem System mittels der Verbindungseinheit kann durch ein Kommunikationsprotokoll, beispielsweise Open Charge Point Protocol (OCPP), erfolgen. Die Daten können eine Fahrzeug-Identifikationsnummer (VIN) umfassen. Die Fahrzeug-Identifikationsnummer kann eindeutig einem Fahrzeug zugeordnet sein.

Gemäß einer Ausführungsform umfasst die Anzeigeeinheit einen Bildschirm. Der Bildschirm kann als eine elektronisch angesteuerte Anzeige zur Darstellung von veränderlichen Informationen, beispielsweise Bildinformationen ausgebildet sein. Vorzugsweise kann der Bildschirm als Berührungsbildschirm, auch Touchscreen, ausgebildet sein, wobei bei einer solchen Ausgestaltung der Bildschirm auch als Eingabegerät konfiguriert sein kann. Der Benutzer ist somit in der Lage, durch Berührung von Teilen des Bildschirms Befehle an den Controller zu übermitteln. Beispielsweise kann der Benutzer ein auf dem Bildschirm angezeigtes Bild durch Berühren des Bildes auf dem Bildschirm auswählen.

Bevorzugt ist die Anzeigeeinheit konfiguriert, um Bildinformationen anzuzeigen, die eine Werbung, eine Werbung eingebettet in einen Film, eine Werbung eingebettet in einem Video, eine Werbung eingebettet in einem Sportprogramm, eine Werbung eingebettet in einem Spielprogramm, eine Werbung eingebettet in einem Fernsehprogramm, eine Werbung eingebettet in einer Nachricht, eine Werbung eingebettet in einer Internet-Seite, und/oder eine Werbung eingebettet in anderen Bildinformationen umfassen.

Wie bereits oben beschrieben, kann die Werbung Informationen über Produkte und Dienstleistungen umfassen. Die Werbung kann darauf gerichtet sein, dem Benutzer des Ladesystems zu einem Kauf der auf der Anzeigeeinheit angezeigten Produkte oder Dienstleistungen zu bewegen. Vorteilhaft ist es, wenn die angezeigte Werbung den Interessen des Benutzers des Ladesystems entspricht.

Die Werbung kann auch als versteckte Werbung auf der Anzeigeeinheit angezeigt werden. Beispielsweise können die Informationen der beworbenen Produkte und/oder Dienstleistungen in einem Film eingebettet sein, wobei der auf der Anzeigeeinheit angezeigte Film den Interessen des Benutzers entsprechen kann. Alternativ dazu kann die Werbung auch in einem Video, einem Sportprogramm, einem Fernsehprogramm, einem Spielprogramm oder in eine Nachricht eingebettet sein, wobei die jeweiligen Programme, Videos oder Nachrichten den Interessen des Benutzers entsprechen können. Der Benutzer kann folglich individuell auf Basis seiner Interessen durch Werbung angesprochen werden.

Vorzugsweise ist die Anzeigeeinheit konfiguriert, um Bildinformationen anzuzeigen, die Informationen aus dem Internet, Informationen aus einer App, Informationen von einem Speichermedium, Videos, Filme, Sportprogramme, Spielprogramme, Nachrichten und/oder Informationen über lokale Einrichtungen umfassen. Die Bildinformationen können eine Vielzahl an Informationen aus verschiedenen Datenquellen umfassen. Bevorzugt können die angezeigten Bildinformationen mit Hilfe des Controllers so ausgewählt oder bestimmt werden, dass die angezeigten Bildinformationen den Interessen des Benutzers entsprechen.

Gemäß einer Ausführungsform ist die Aufnahmeeinheit auf eine Umgebung, insbesondere auf ein Objekt vor der Anzeigeeinheit ausrichtbar. Die Aufnahmeeinheit kann derart ausgebildet sein, um manuell oder elektronisch auf einen Bereich vor dem Ladesystem ausrichtbar zu sein. Bei einer elektronischen Ausrichtung der Aufnahmeeinheit kann sich die Aufnahmeeinheit in Abhängig eines erkannten Fahrzeugs, einer erkannten Person oder eines erkannten sonstigen Gegenstands selbstständig ausrichten, beispielsweise durch Fokussierung auf das erkannte Fahrzeug, auf die erkannte Person oder auf den erkannten sonstigen Gegenstand. Durch eine derartige Ausrichtung kann die Objekterkennung verbessert werden.

Bevorzugt umfasst die Aufnahmeeinheit eine Kamera. Die Kamera kann konfiguriert sein, um ein Bild der Umgebung des Ladesystems aufzuzeichnen. Die Kamera kann als RGB-Kamera ausgebildet sein, um Farbinformationen der Umgebung aufzuzeichnen. Bevorzugt kann die Kamera konfiguriert sein, um Bilder oder Videos mit einer hohen Auflösung aufzuzeichnen.

Vorzugsweise umfasst die Aufnahmeeinheit zumindest zwei Kameras, besonders bevorzugt drei Kameras oder mehr als drei Kameras. Durch den Einsatz mehrerer Kameras kann das Blickfeld und somit ein durch die Kameras überwachter Bereich vor dem Ladesystem vergrößert werden.

Insbesondere kann die Aufnahmeeinheit an einem Rand der Anzeigeeinheit angeordnet sein. Die Aufnahmeeinheit kann bevorzugt an einem oberen Rand der Anzeigeeinheit angeordnet sein. Eine derartige Anordnung kann vorteilhaft sein, um einen Benutzer der sich vor dem Ladesystem befindet, beispielsweise vor der Anzeigeeinheit des Ladesystems, und das Ladesystem oder die Anzeigeeinheit bedient zu erfassen. Alternativ oder zusätzlich kann die Aufnahmeeinheit an einem seitlichen Rand oder an einem unteren Rand der Anzeigeeinheit angeordnet sein.

Gemäß einer Ausführungsform kann die Bildverarbeitungseinheit konfiguriert sein, das zumindest eine Objekt oder ein Merkmal des Objekts mittels einer Daten-Extraktionstechnik zu bestimmen und/oder mittels einer Hash-Funktion zu verschlüsseln. Das zumindest eine Objekt oder ein Merkmal des Objekts kann mittels der Hash-Funktion unkenntlich gemacht werden, beziehungsweise es kann mittels der Hash-Funktion verhindert werden, dass die Daten des Objekts oder Daten eines Merkmals des Objekts in Klartext lesbar sind. Die Hash-Funktion kann einen Algorithmus umfassen, der Daten eines erkannten Objekts in eine Zeichenfolge umwandelt. Die Zeichenfolge kann als Hashwert oder Hash bezeichnet werden, wobei der Hashwert eine definierte Länge aufweisen kann. Der Hashwert ist für jedes Objekt oder für jedes Merkmal eines Objekts eindeutig. Die eindeutigen Hashwerte können miteinander verglichen werden. Beispielsweise kann ein Kennzeichen als Merkmal eines Objekts in einen eindeutigen Hashwert mittels der Hash-Funktion umgewandelt bzw. verschlüsselt werden. Der eindeutige Hashwert kann für Menschen nicht auslesbar sein, jedoch kann der eindeutige Hashwert beispielsweise an verschiedenen Ladestationen mit anderen ermittelten Hashwerten verglichen werden.

Der Hashwert kann eine hexadezimale Zeichenkette umfassen. Daten-Extraktionstechniken suchen und identifizieren relevante Daten in den von der Aufnahmeeinheit aufgezeichneten Daten. Daten-Extraktionstechniken können KI-Methoden (Künstliche Intelligenz Methoden) umfassen.

Bevorzugt kann die Bildverarbeitungseinheit konfiguriert sein, die Daten der Aufnahmeeinheit an ein Computersystem weiterzuleiten. Das Computersystem kann dazu ausgebildet sein, die Daten der Aufnahmeeinheit weiter zu verarbeiten.

Gemäß einer Ausführungsform kann das zumindest eine Objekt ein Fahrzeug, eine oder mehrere Personen, und/oder einen Gegenstand umfassen. Das Fahrzeug kann insbesondere ein Elektrofahrzeug sein, wobei das Elektrofahrzeug einen Personenkraftwagen (PKW) oder einen Lastkraftwagen (LKW) umfassen kann. Die eine oder mehrere Personen können derart unterschieden werden, dass lediglich die Person oder die Personen als Objekt erkannt werden, die das Ladesystem benutzen. Beispielsweise kann dies dadurch erfolgen, dass erkannt wird, welche Person mit dem Gesicht in Richtung der Anzeigeeinheit des Ladesystems ausgerichtet ist. Das zumindest eine Objekt kann geeignet sein, um einen Benutzer des Ladesystems zu identifizieren.

Insbesondere kann die Bildverarbeitungseinheit konfiguriert sein, zumindest ein Merkmal des zumindest einen Objekts zu bestimmen. Das Merkmal kann eine Teilmenge des Objekts sein.

Das zumindest eine Merkmal kann auch mittels der Auswerteeinheit bestimmt werden. Das zumindest eine Merkmal kann mittels einem KI-gestützten Algorithmus, beispielsweise einem neuronalen Netz, aus den Daten, insbesondere aus der Fahrzeug-Identifikationsnummer, ermittelt werden.

Die Bestimmung des zumindest einen Merkmals des Objekts kann zu einer besseren Identifizierung eines Benutzers des Ladesystems beitragen, wodurch sich auch die Bestimmung der Bildinformationen, die für den Benutzer auf der Anzeigeeinheit angezeigt werden, verbessern kann.

Vorzugsweise kann das zumindest eine Merkmal ein Nummernschild eines Fahrzeugs umfassen, einen Markenname eines Fahrzeugs, einen Fahrzeugtyp eines Fahrzeugs, ein Baujahr eines Fahrzeugs, eine Ausstattung eines Fahrzeugs, eine Größe einer Person, ein Geschlecht einer Person, ein Alter einer Person, eine Brille einer Person, und/oder Kleidungsmerkmale einer Person. Beispielsweise kann über ein Nummernschild, insbesondere durch das Kennzeichen des Fahrzeugs eine Zuordnung zu dem Benutzer erfolgen. Die Merkmale Markenname eines Fahrzeugs, Fahrzeugtyp eines Fahrzeugs, Baujahr eines Fahrzeugs, Ausstattung eines Fahrzeugs, Größe einer Person, Geschlecht einer Person, Alter einer Person, Brille einer Person, und/oder Kleidungsmerkmale einer Person können zu einer Segmentierung der Person nach Interessen der Person herangezogen werden. Dies kann wiederum zur einer verbesserten Bestimmung der Bildinformationen die auf der Anzeigeeinheit angezeigt werden führen.

Gemäß einer Ausführungsform kann der Controller konfiguriert sein, zumindest einen Objektdatensatz zu bestimmen. Der Controller kann insbesondere konfiguriert sein, für jedes erkannte Objekt einen Objektdatensatz zu bestimmen. Der jeweilige Objektdatensatz kann zur Ermittlung von Interessen eines Benutzers des Ladesystems und somit zur Auswahl oder Bestimmung der Bildinformationen vorteilhaft sein.

Bevorzugt umfasst der zumindest eine Objektdatensatz das Objekt, das zumindest eine Merkmal, einen Standort des Systems, eine Zeitangabe, eine Wetterangabe, und/oder eine Temperaturangabe. Der Standort des Systems kann GPS-Koordinaten umfassen.

Zusätzlich oder alternativ kann der Standort des Systems Informationen über die Umgebung des Standorts umfassen. Beispielsweise kann der Standort des Systems umfassen, ob und welche Einkaufsmöglichkeiten sich in der Umgebung des Systems befinden. So kann der Standort des Systems angeben, ob sich ein Bekleidungsgeschäft, ein Schuhgeschäft, ein Tierbedarfsgeschäft, eine Apotheke, ein Baumarkt oder ähnliches in der Umgebung des Systems befindet.

Die Zeitangabe kann angeben, wie lange das Objekt in dem Blickfeld der Aufnahmeeinheit erkannt wurde. Insbesondere kann die Zeitangabe eine Aufenthaltsdauer des Objekts angeben.

Besonders bevorzugt kann der Controller konfiguriert sein, den zumindest einen Objektdatensatz zu verschlüsseln. Eine Verschlüsselung des zumindest einen Objektdatensatzes kann vorteilhaft sein, um Datenschutzbestimmungen zu erfüllen.

Insbesondere kann der Controller konfiguriert sein, den zumindest einen Objektdatensatz verschlüsselt zu speichern. Der zumindest eine Objektedatensatz kann verschlüsselt in einer Datenbank abgespeichert werden. Der abgespeicherte Objektdatensatz kann zur Bestimmung der Bildinformationen verwendet werden.

Gemäß einer weiteren Ausführungsform kann der Controller konfiguriert sein, den zumindest einen Objektdatensatz mit zumindest einem anderen Objektdatensatz zu vergleichen. Durch einen Vergleich von Objektdatensätzen können Rückschlüsse auf die Interessen von Personen gezogen werden. Diese Interessen können vorteilhalft für die Bestimmung der Bildinformationen sein.

Vorzugsweise kann der Controller konfiguriert sein zu bestimmen, ob zumindest ein Teil des zumindest einen Objektdatensatzes mit zumindest einem Teil des zumindest einen anderen Objektdatensatzes übereinstimmt. Ein Teil eines Objektdatensatzes kann ein Merkmal des Objekts umfassen. Ein Vergleich von Teilen der Objektdatensätze kann ein genauere Bestimmung der für die Person relevanten Bildinformationen ermöglichen.

Gemäß einer solchen Ausführungsform kann der Controller konfiguriert sein, basierend auf dem Vergleich des zumindest einen Objektdatensatz mit dem zumindest einen anderen Objektdatensatz die Bildinformationen zu bestimmen und auf der Anzeigeeinheit anzuzeigen. Je größer eine Überstimmung des zumindest einen Objektdatensatz mit dem zumindest einen anderen Objektdatensatz ist, desto größer können die Interessen der dem jeweiligen Objektdatensatz zugeordneten Personen sein.

Eine Übereinstimmung von Objektdatensätzen oder von Teilen der Objektdatensätze kann beispielsweise dadurch bestehen, dass die Objektdatensätze an Ladesystemen mit gleichem Standort aufgezeichnet wurden.

Gemäß einer Ausführungsform kann der zumindest eine andere Objektdatensatz in einem internen Speicher des Systems, in einem externen Speicher des Systems, in einem anderen externen Speicher, und/oder in einem Netzwerkspeicher gespeichert werden und von dort mittels des Controllers abrufbar sein.

Der zumindest eine Objektdatensatz kann auch in mehreren Speichern abgespeichert werden. Der interne Speicher des Systems, der externe Speicher des Systems, die anderen externen Speicher, und/oder der Netzwerkspeicher können vernetzt, d.h. miteinander verbunden sein, sodass ein Zugriff oder Austausch der abgespeicherten Objektdatensätze möglich sind.

Gemäß einer weiteren Ausführungsform kann das System ferner einen internen Speicher umfassen, wobei der Controller konfiguriert sein kann, den zumindest einen Objektdatensatz in dem internen Speicher zu speichern. Das System oder die Ladesäule, die ein Objekt erfasst, kann den entsprechenden Objektdatensatz lokal in dem internen Speicher der Ladesäule speichern. Dies kann eine Auswertung oder einen Vergleich mit anderen in dem internen Speicher des Systems abgespeicherten Objektdatensätzen ermöglichen, ohne dass ein Datenaustausch mit anderen Systemen nötig ist.

Gemäß einer solchen Ausführungsform kann der Controller drahtlos oder drahtgebunden mit dem internen Speicher verbunden sein. Die drahtlose oder drahtgebundene Verbindung zwischen dem internen Speicher und dem Controller ermöglicht das Abspeichern und Abrufen von Objektdatensätzen durch den Controller.

Gemäß einer weiteren Ausführungsform kann das System ferner einen externen Speicher umfassen, wobei der Controller konfiguriert sein kann, den zumindest einen Objektdatensatz in dem externen Speicher zu speichern. Vorteilhaft kann die Abspeicherung des zumindest einen Objektdatensatzes in dem externen Speicher sein, da hierdurch alle Objektdatensätze zentral in einem Speicher verwaltet werden können.

Vorzugsweise kann der externe Speicher ein Server oder ein Cloud-Server sein. Das Abspeichern der Objektdatensätze in einem externen Speicher, insbesondere auf einem Server oder Cloud-Server, kann kostengünstiger sein im Vergleich zu einem Abspeichern der Objektdatensätze in einem internen Speicher des Systems, da keine entsprechend große Speicher in den Systemen vorgehalten werden müssen.

Gemäß einer solchen Ausführungsform kann der Controller drahtlos oder drahtgebunden mit dem externen Speicher verbunden sein. Die drahtlose oder drahtgebundene Verbindung zwischen dem externen Speicher und dem Controller kann das Abspeichern und Abrufen von Objektdatensätzen durch den Controller ermöglichen.

Gemäß einer Ausführungsform kann der Controller konfiguriert sein, den zumindest einen Objektdatensatz von dem externer Speicher mittels einer Datenverbindung abzurufen.

Gemäß einer solchen Ausführungsform kann die Datenverbindung eine Funkverbindung, insbesondere eine Mobilfunkverbindung oder eine Kabelverbindung sein.

Gemäß einer Ausführungsform kann der Controller drahtlos oder drahtgebunden mit der Anzeigeeinheit, der Aufnahmeeinheit und der Bildverarbeitungseinheit verbunden sein.

Gemäß einer weiteren Ausführungsform kann der Controller drahtlos oder drahtgebunden mit der Anzeigeeinheit und der Auswerteeinheit verbunden sein.

Gemäß einer weiteren Ausführungsform kann der Controller konfiguriert sein, eine Zahlung auszulösen, wenn die Bildinformationen bestimmt und auf der Anzeigeeinheit angezeigt wurden. Die Zahlung kann eine automatische Abbuchung eines Geldbetrags von einer bekannten Bankverbindung umfassen. Die Bildinformationen können eindeutig einem Unternehmen zuordenbar sein, welches das Anzeigen der Bildinformationen auf der Anzeigeeinheit des Systems beauftragt hat.

Bevorzugt kann der Controller konfiguriert sein, eine Zahlung auszulösen, wenn die auf der Anzeigeeinheit angezeigten Bildinformationen eine Werbung, einen Film, ein Video, ein Sportprogramm, ein Spielprogramm, einen vorgegebenen Inhalt umfassen. Die Zahlung kann abhängig von einer Häufigkeit der dargestellten Bildinformationen sein. Die Zahlung kann auch abhängig von einer Korrelation zwischen den Interessen eines Benutzers des Systems und den angezeigten Bildinformationen sein. Beispielsweise kann die Zahlung größer sein, wenn die Interessen des Benutzers mit den Inhalten der Bildinformationen übereinstimmen.

Gemäß einer Ausführungsform kann das System eine Ladesäule umfassen, die mit AC-Strom und/oder mit DC-Strom betreibbar ist. Die Ladesäule kann dazu konfiguriert sein, Elektrofahrzeuge, insbesondere Batterien von Elektrofahrzeugen zu laden. Die Ladesäule kann insbesondere konfiguriert sein, Elektrofahrzeuge mit Gleichstrom (DC-Strom) oder Wechselstrom (AC-Strom) zu laden.

Vorzugsweise kann die Anzeigeeinheit, bspw. ein Bildschirm, direkt, indirekt bzw. drahtlos an der Ladesäule angeschlossen sein.

Gemäß einer weiteren Ausführungsform kann das System eine Leuchteinheit umfassen, die konfiguriert ist, um einen Status des Systems anzuzeigen.

Die Leuchteinheit kann eine Vielzahl an Leuchtdioden umfassen.

Der Status des Systems kann beispielsweise einen betriebsbereiten Zustand der Ladesäule anzeigen. Ferner kann der Status eine Störung des Systems anzeigen, wobei eine Störung vorliegen kann, wenn das System nicht betriebsbereit ist. Der Status des Systems kann auch anzeigen, ob das System belegt ist, d.h. ob aktuell Elektrofahrzeuge an dem System oder der Ladesäule geladen werden.

Vorzugsweise kann die Leuchteinheit als Lichtstreifen ausgebildet sein. Durch den Lichtstreifen kann der Status des Systems, insbesondere einer Ladesäule, für einen Benutzer der Ladesäule schon von Weitem erkennbar sein. Der Benutzer kann somit den Status der Ladesäule bereits erkennen selbst wenn sich der Benutzer noch nicht in unmittelbarer Umgebung, beispielsweise direkt vor der Ladesäule befindet.

Zudem kann der Lichtstreifen vorteilhaft sein, um eine Ladesäule insbesondere in der Nacht oder bei schlechten Witterungsverhältnissen zu finden bzw. zu erkennen.

Insbesondere kann die Leuchteinheit ausgebildet sein, um elektromagnetische Strahlung mit unterschiedlicher Wellenlänge zu emittieren. Das Emittieren bzw. Aussenden von elektromagnetischer Strahlung, insbesondere Licht, mit unterschiedlicher Wellenlänge, insbesondere farbiges Licht, kann vorteilhaft sein, um einem potentiellen Benutzer anzuzeigen in welchem Status sich das System bzw. die Ladesäule befindet. Beispielsweise kann das Aussenden von blauem Licht oder von rotem Licht dem Benutzer bereits bei einer Anfahrt an die Ladesäule kenntlich machen, dass die Ladesäule aktuell belegt ist (blaues Licht) oder einen Defekt aufweist (rotes Licht). Der Benutzer kann dann gleich zu einer anderen Ladesäule fahren, ohne erst an der belegten oder defekten Ladesäule anhalten und aussteigen zu müssen.

Bevorzugt kann die Leuchteinheit an einem oberen Rand und/oder einem unteren Rand des Systems, insbesondere an einem oberen Rand und/oder einem unteren Rand einer Ladesäule, angeordnet sein.

Der untere Rand der Ladesäule ist durch den Bereich der Ladesäule bestimmt, auf dem die Ladesäule auf dem Boden steht. Der untere Rand der Ladesäule bildet dementsprechend einen unteren Abschluss der Ladesäule, der beispielsweise durch eine Kante zwischen Ladesäule und Boden bestimmt ist.

Der obere Rand der Ladesäule ist in vertikaler Richtung entgegengesetzt zu dem unteren Rand der Ladesäule angeordnet und bildet einen oberen Abschluss der Ladesäule. Die Anordnung des Lichtstreifens an dem oberen Rand und/oder an dem unteren Rand der Ladesäule kann zu einer verbesserten Anzeige des Status der Ladesäule führen.

Besonders bevorzugt kann die Leuchteinheit zumindest abschnittsweise umlaufend an dem System, insbesondere an einer Ladesäule angeordnet sein. Die Leuchteinheit, insbesondere der Lichtstreifen kann mehrere, abschnittsweise unterbrochene Elemente umfassen.

Die Elemente können umlaufend an der Ladesäule angeordnet sein. Umlaufend bedeutet in diesem Zusammenhang, dass die Leuchteinheit bzw. die Elemente der Leuchteinheit auch an den seitlichen Rändern der Ladesäule angeordnet sein können.

Die Leuchteinheit kann auch in einer horizontalen Ebene parallel zum Boden umlaufend an der Ladesäule angeordnet sein, sodass die Leuchteinheit von allen Seiten sichtbar ist.

Gemäß einem weiteren Aspekt der Erfindung kann ein Netzwerk mehrere Systeme wie hierin beschrieben umfassen, wobei die Systeme an verschiedenen Standorten angeordnet sein können und mit einem Server oder Cloud-Server verbunden sein können.

Hierbei kann bspw. bei verschiedenen Ladevorgängen an verschiedenen Standorten ein und demselben Benutzer benutzerspezifisch und/oder standortspezifisch Informationen weitergegeben werden.

Gemäß einem weiteren Aspekt der Erfindung kann ein nichtflüchtiger Datenspeicher derart konfiguriert sein, um Anweisungen des Controllers für eine Steuerung eines hierin beschriebenen Systems zu speichern. Der nichtflüchtige Datenspeicher kann konfiguriert sein als: ein magnetisches Medium, beispielsweise ein Festplattenlaufwerk (HDD); ein Solid-State-Laufwerk (SSD); ein Nur-Lese-Speicher (ROM), beispielsweise ein Flash-Speicher; oder dergleichen.

Darüber hinaus kann der nichtflüchtige Datenspeicher konfiguriert sein, über eine Datenverbindung, beispielsweise eine Internetverbindung, zugänglich zu sein. Der nichtflüchtige Datenspeicher kann beispielsweise ein Online-Datenspeicher oder ein Cloud-Speicher sein.

Gemäß einem weiteren Aspekt der Erfindung kann ein Computersystem einen nichtflüchtigen Datenspeicher und das hierin beschriebene System umfassen.

Die Erfindung wird nachfolgend anhand von Ausführungsbeispielen mit Bezug auf die Zeichnungen beschrieben.
- Fig. 1: zeigt eine schematische Frontansicht eines Systems, insbesondere eines Ladesystems gemäß einer Ausführungsform;
- Fig. 2: zeigt eine schematische Frontansicht eines Systems, insbesondere eines Ladesystems gemäß einer weiteren Ausführungsform;
- Fig. 3: zeigt eine schematische Seitenansicht des Ladesystems aus Fig. 1 oder Fig. 2;
- Fig. 4A: zeigt eine schematische Anordnung einer Kamera an einer Anzeigeeinheit gemäß einer Ausführungsform;
- Fig. 4B: zeigt eine schematische Anordnung von zwei Kameras an einer Anzeigeeinheit gemäß einer weiteren Ausführungsform;
- Fig. 4C: zeigt eine schematische Anordnung von drei Kameras an einer Anzeigeeinheit gemäß einer weiteren Ausführungsform;
- Fig. 5: zeigt eine schematische Darstellung eines Ladesystems gemäß einer Ausführungsform;
- Fig. 6: zeigt eine schematische Darstellung zur Bestimmung eines Merkmals eines Fahrzeugs in einem Zeitpunkt gemäß einer Ausführungsform;
- Fig. 7: zeigt eine weitere schematische Darstellung zur Bestimmung eines Merkmals eines Fahrzeugs in einem Zeitpunkt gemäß einer Ausführungsform; und
- Fig. 8: zeigt eine schematische Darstellung eines Computersystems gemäß einer Ausführungsform.

Personalisierte Werbung im Bereich Online-Marketing basiert technisch vor allem auf sogenannten HTTP-Cookies. Cookies sind in einer kleinen Textdatei kodierte Daten, welche genutzt werden können, um ein Computersystem oder einen Computer, ein Netzwerk, in dem sich der Computer befindet, eine besuchte Internet-seite, einen Warenkorb in einem Onlineshop oder Benutzernamen zu speichern.

Die Daten, welche den Computer betreffen, sind dabei eindeutig und können immer auf den jeweiligen Computer zurückgeführt werden. Wird beispielsweise von einem Computer eine Verbindung zu einer neuen Internetseite aufgebaut, kann ein Server auf die Cookies auf dem Computer zugreifen und entsprechende Informationen verwerten.

Bei personalisierter Werbung wird dieser technische Zusammenhang ausgenutzt, um einem Benutzer möglichst zu ihm passende Werbung auf Internetseiten anzuzeigen. Dafür werden entsprechend des Browserverlaufs des Computers und die zuletzt angesehenen Produkte auf das generelle Interesse des Benutzers analysiert. Hat ein Benutzer sich an einem Computer beispielsweise in letzter Zeit viele Schuhe von einem bestimmten Hersteller in Onlinestores angesehen, können diese Daten ausgewertet werden, um auf einer neuen Internetseite Werbung von eben diesen Schuhen dieses Herstellers anzuzeigen.

Klassische Cookies können auf einer Onlinestruktur basieren. Ein Internetbrowser kann dabei als Medium fungieren, welches die Nutzungsdaten der am Computer sitzenden Person, also eines Benutzers des Computers, dokumentiert und speichert. Der Internetbrowser sammelt die Nutzungsdaten des Benutzers sowie Daten des Computers und einen Verlauf der von dem Benutzer besuchten Internetseiten und speichert diese Nutzungsdaten lokal auf dem Computer in Cookies ab. Ein Server kann diese lokal gespeicherten Daten auswerten. Wechselt der Benutzer die Internetseite, so ruft der Server dieser Internetseite die Cookies von dem Internetbrowser beziehungsweise von dem Computer ab und wertet diese für die eigenen Zwecke, beispielsweise Werbung, aus. Dem Benutzer kann somit auf Basis seiner Nutzungsdaten personalisierte Werbung auf der Internetseite angezeigt werden.

Das Konzept der personalisierten Werbung kann durch folgende drei Komponenten beschrieben werden: eine Person, welcher Werbeunternehmen gezielt passende Werbung präsentieren möchten; einem Medium, welches speichert, für welche Themen sich die Person interessiert, welche Produkte sich die Person ansieht und wie oft die Person die Produkte betrachtet; und einem Server, welcher die Nutzungsdaten der Person analysiert und der Person an neuen Standorten Werbung oder Produkte basierend auf seinen Interessen anzeigt.

Das Konzept der personalisierten Werbung kann auch auf andere Bereiche übertragen werden. Beispielsweise lässt sich das Konzept an Ladesäulen für Elektrofahrzeuge, wie hierin beschrieben, nutzen.

Eine zunehmende Anzahl an Elektrofahrzeugen erfordert gleichermaßen eine zunehmende Anzahl an Möglichkeiten diese Elektrofahrzeuge zu laden. Dabei kann zwischen privater Infrastruktur und öffentlicher Infrastruktur unterschieden werden. Die private Infrastruktur beschränkt sich im Wesentlichen auf Lademöglichkeiten die von den Benutzern von Elektrofahrzeugen selbst installiert werden, beispielsweise in der heimischen Garage. Typischerweise umfassen die privaten Lademöglichkeiten Wallboxen mit einer Ladeleistung von beispielsweise 11 kW.

Die öffentliche Ladeinfrastruktur wird hingegen von Unternehmen (sogenannten CPOs), beispielsweise Stromanbietern oder Automobilherstellern, an öffentlich zugänglichen Stellen installiert und den Benutzern von Elektrofahrzeugen gegen Entgelt zur Verfügung gestellt. Typischerweise umfasst die öffentliche Ladeinfrastruktur Ladesysteme, insbesondere Ladesäulen, die neben der Bereitstellung von Ladestrom auch ein Registrierungs- und Abrechnungssystem für die Benutzer zur Verfügung stellen.

Die Registrierung der Kunden oder Benutzer kann dabei durch eine Ladekarte mit RFID-Chip oder per App-Steuerung erfolgen. Ebenfalls möglich ist eine Registrierung der Kunden durch eine Kreditkarte oder durch eine Identifizierung des Fahrzeugs via Plug&Charge über ein Ladekabel. Die Ladeleistung der öffentlich zugänglichen Ladesäulen kann von 22kW bis über 300kW reichen. Die geometrischen Abmessungen einer Ladesäule sind systembedingt deutlich größer als leistungsärmere Ladesysteme der privaten Infrastruktur. Nachfolgend werden Systeme, insbesondere Ladesäulen der öffentlichen Ladeinfrastruktur beschrieben.

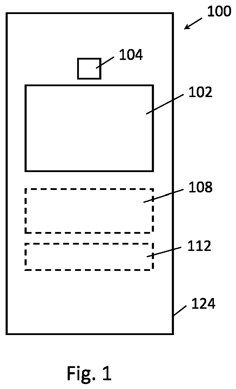

Fig. 1 zeigt eine schematische Frontansicht eines Systems 100, insbesondere ein Ladesystem zum Laden eines Elektrofahrzeugs, zur Bestimmung von Bildinformationen gemäß einer Ausführungsform der Erfindung. Das System 100 umfasst eine Ladesäule 124, die mit Gleichstrom, DC-Strom, oder Wechselstrom, AC-Strom, betreibbar ist. Entsprechend ist die Ladesäule 124 konfiguriert, um Elektrofahrzeuge an der Ladesäule 124 mit Gleichstrom oder mit Wechselstrom zu laden.

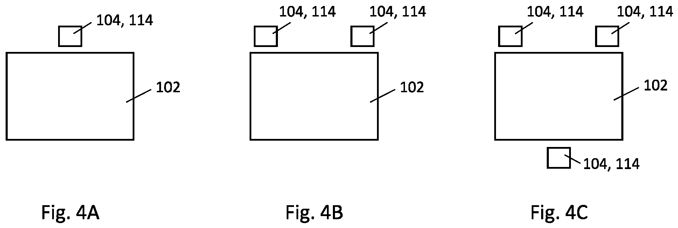

Das System 100 umfasst ferner eine Anzeigeeinheit 102, beispielsweise einen Bildschirm, die an der Ladesäule 124 angeschlossen und konfiguriert ist, Bildinformationen anzuzeigen. Die Bildinformationen können insbesondere personalisierte Werbung umfassen. Weiterhin umfasst das System 100 eine Aufnahmeeinheit 104, die beispielsweise als Kamera 114 (siehe Figuren 4A bis 4C) ausgebildet ist.

Das System 100 umfasst zusätzlich eine Bildverarbeitungseinheit 108 und einen Controller 112, wobei der Controller 112 mit der Anzeigeeinheit 102, der Aufnahmeeinheit 104 und der Bildverarbeitungseinheit 108 verbunden ist.

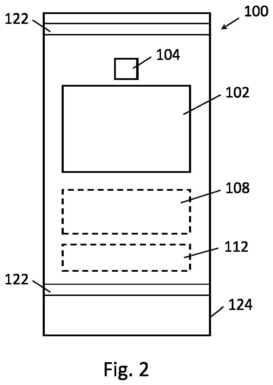

Fig. 2 zeigt eine weitere Ausführungsform des erfindungsgemäßen Systems 100 in schematischer Frontansicht. Zusätzlich zu den bereits in Fig. 1 beschriebenen Komponenten, Ladesäule 124, Anzeigeeinheit 102, Aufnahmeeinheit 104, Bildverarbeitungseinheit 108 und Controller 110, umfasst das System 100 zumindest eine Leuchteinheit 122. Die Leuchteinheit 122 ist derart ausgebildet, dass die Leuchteinheit 122 elektromagnetische Strahlung mit unterschiedlicher Wellenlänge emittieren kann. Vorzugsweise ist die Leuchteinheit 122 als Lichtstreifen ausgebildet. Insbesondere kann die Leuchteinheit 122 derart konfiguriert sein, um den Status der Ladesäule 124 farblich anzuzeigen.

Der Status der Ladesäule 124 kann beispielsweise angeben, ob die Ladesäule 124 betriebsbereit ist oder ob die Ladesäule 124 einen Fehler aufweist. Die Ladesäule 124 hat den Status "betriebsbereit", wenn an der Ladesäule 124 Elektrofahrzeuge geladen werden können. Der Status "betriebsbereit" kann beispielsweise durch einen grün leuchtenden Lichtstreifen angezeigt werden.

Die Ladesäule 124 hat den Status "Fehler", wenn an der Ladesäule 124 nicht geladen werden kann, insbesondere wenn ein Elektrofahrzeug an der Ladesäule 124 nicht geladen werden kann. Der Status "Fehler" kann beispielsweise durch einen rot leuchtenden Lichtstreifen angezeigt werden.

Ferner kann der Status der Ladesäule 124 anzeigen, dass aktuell an der Ladesäule 124 ein Elektrofahrzeug geladen wird. Der Status "belegt" kann beispielsweise mittels eines blau leuchtenden Lichtstreifens anzeigen, dass aktuell an der Ladesäule 124 ein Elektrofahrzeug geladen wird.

Die Leuchteinheit 122, insbesondere der Lichtstreifen, ist wie in Fig. 2 dargestellt, bevorzugt an einem oberen Rand und/oder an einem unteren Rand des Systems 100, insbesondere an einem oberen Rand und/oder an einem unteren Rand der Ladesäule 124, angeordnet.

Eine Anordnung des Lichtstreifens an dem oberen Rand der Ladesäule 124, beispielsweise oberhalb der Anzeigeeinheit 102, kann vorteilhaft sein, da der Lichtstreifen von Weitem für einen potentiellen Benutzer der Ladesäule 124 sichtbar ist.

Die Anordnung des Lichtstreifens an dem unteren Rand der Ladesäule 124 beispielsweise in einem Bereich unterhalb der Anzeigeeinheit 102, insbesondere in einem Bereich in Bodennähe, kann vorteilhaft sein, da das von dem Lichtstreifen emittierte Licht einen Bodenbereich um die Ladesäule 124 ausleuchten kann. Der Bodenbereich um die Ladesäule 124 kann das von der Leuchteinheit 122 ausgestrahlte Licht reflektieren und zur besseren Erkennbarkeit des Status der Ladesäule 124 beitragen.

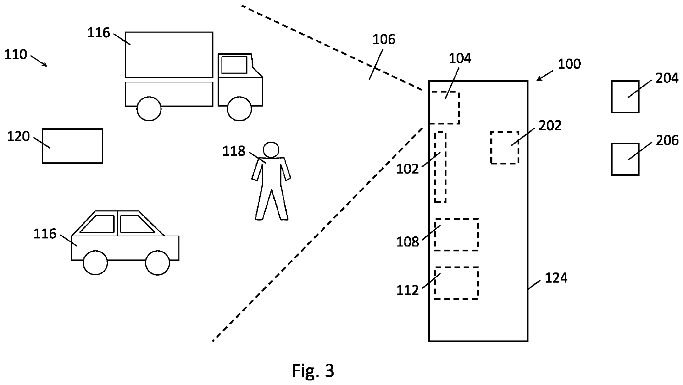

Fig. 3 zeigt eine schematische Seitenansicht des Ladesystems aus Fig. 1 oder Fig. 2. Die Aufnahmeeinheit 104 ist oberhalb der Anzeigeeinheit 102 an der Ladesäule 124 angeordnet.

Die Aufnahmeeinheit 104 ist konfiguriert, um Objekte 110 in einem Blickfeld 106 der Aufnahmeeinheit 104, insbesondere vor der Anzeigeeinheit 102 zu erfassen. Die erfassten Objekte 110 oder Daten der erfassten Objekte 110 können in einem internen Speicher 202 der Vorrichtung 100, in einem externen Speicher 204 oder auf einem Server 206 abgespeichert werden. Die von der Aufnahmeeinheit 104 erfassten Objekte 110 können beispielsweise Fahrzeuge 116, Personen 118 oder Gegenstände 120 umfassen.

Die Fahrzeuge 116 können insbesondere Elektrofahrzeuge, wie beispielsweise einen batteriebetriebenen Personenkraftwagen, einen batteriebetriebenen Lastkraftwagen, ein batteriebetriebenes Fahrrad, oder ein batteriebetriebenes Elektroboot umfassen.

Die Aufnahmeeinheit 104 kann zumindest eine Person 118 erfassen, die sich in dem Blickfeld 106 der Aufnahmeeinheit 104 befindet. Die zumindest eine Person 118 kann insbesondere ein Benutzer der Ladesäule 124 sein. Ein Gegenstand 120 kann jeden beliebigen Gegenstand 120 umfassen, der zu einer Identifizierung einer Person 118, insbesondere zu einer Identifizierung eines Benutzers der Ladesäule 124 geeignet ist. Die Aufnahmeeinheit 104 kann beweglich an der Ladesäule 124 angeordnet sein. Insbesondere kann die Aufnahmeeinheit 104 auf eine Umgebung vor der Anzeigeeinheit 102 ausrichtbar sein, sodass das Blickfeld 106 der Aufnahmeeinheit 104 Objekte 110 die sich vor der Anzeigeeinheit 102 befinden erfassen kann, wie in Fig. 3 dargestellt.

Fig. 4A bis 4C zeigen schematische Anordnungen der Aufnahmeeinheit 104, insbesondere schematische Anordnungen von Kameras 114 in einem Bereich um die Anzeigeeinheit 102. In einer Ausführungsform umfasst die Aufnahmeeinheit 104 eine Kamera 114, die mittig oberhalb der Anzeigeeinheit 102 angeordnet ist (Fig. 4A).

Fig. 4B zeigt eine alternative Ausführungsform in der die Aufnahmeeinheit 104 zwei Kameras 114 umfasst. Die zwei Kameras 114 sind horizontal beabstandet voneinander an einem oberen Rand der Anzeigeeinheit 102 angeordnet.

Eine weitere alternative Ausführungsform ist in Fig. 4C dargestellt, in der die Aufnahmeeinheit 104 drei Kameras 114 umfasst. In dieser Ausführungsform sind zwei Kameras 114 an dem oberen Rand der Anzeigeeinheit 102 horizontal beabstandet angeordnet, wie in der Ausführungsform aus Fig. 4B. Zusätzlich ist die dritte Kamera 114 mittig zentriert an einem unteren Rand der Anzeigeeinheit 102 angeordnet.

Es versteht sich, dass die Aufnahmeeinheit 104 auch mehr als drei Kameras 114 umfassen kann.

Die Kameras 114 können an beliebigen Stellen um die Anzeigeeinheit 102, insbesondere auch an den seitlichen Rändern der Anzeigeeinheit 102 (in den Fig. 4A - 4C nicht dargestellt) angeordnet sein. Insbesondere können die Kameras 114 an beliebigen Stellen an der Ladesäule 124 angeordnet sein, die es den Kameras 114 ermöglicht, einen Bereich vor der Ladesäule 124 zu erfassen.

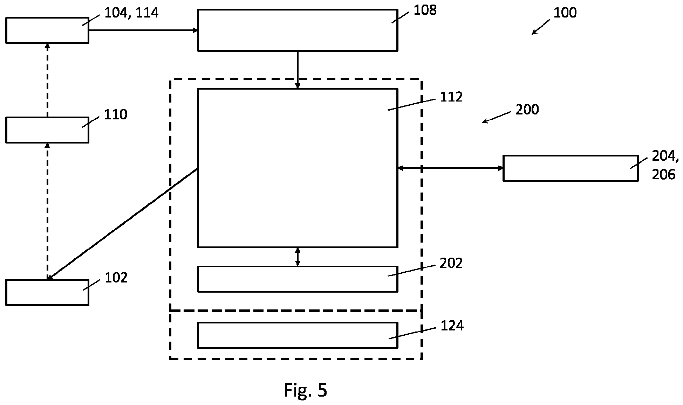

Fig. 5 zeigt eine schematische Darstellung eines Ladesystems gemäß einer Ausführungsform der Erfindung. Die Aufnahmeeinheit 104 ist als Kamera 114 ausgebildet, welche konfiguriert ist Daten eines Objekts 110 welches sich in einem Blickfeld 106 der Kamera 114 befindet zu erfassen. Die Daten können beispielsweise ein Bild des Objekts 110 oder ein Video des Objekts 110 umfassen.

Die Daten des Objekts 110 werden von der Kamera 114 an eine Bildverarbeitungseinheit 108 übermittelt. Die Bildverarbeitungseinheit 108 ist konfiguriert, um die Daten der Aufnahmeeinheit 104, insbesondere der Kamera 114, zu empfangen und das Objekt 110 basierend auf den Daten zu bestimmen. Die Bildverarbeitungseinheit 108 kann ferner konfiguriert sein, um zumindest ein Merkmal des Objekts 110 zu bestimmen.

Das Objekt 110 oder das zumindest eine Merkmal des Objekts 110 kann insbesondere mit Hilfe von Daten-Extraktionstechniken bestimmt und mit Hilfe einer Hash-Funktion verschlüsselt werden. Insbesondere kann ein trainiertes neuronales Netz zur Erkennung des Objekts 110 verwendet werden. Das trainierte neuronale Netz oder ein anderes neuronales Netz kann auch zum Verschlüsseln

(Hashen) des Objekts 110 oder des zumindest einen Merkmal des Objekts 110 genutzt werden. Das zumindest eine Merkmal des Objekts 110 kann ein Nummernschild eines Fahrzeugs 116, ein Markenname eines Fahrzeugs 116, ein Fahrzeugtyp, eine Größe einer Person 118, ein Geschlecht einer Person 118, ein Alter einer Person 118, eine Brille einer Person 118 und/oder Kleidungsmerkmale einer Person 118 umfassen.

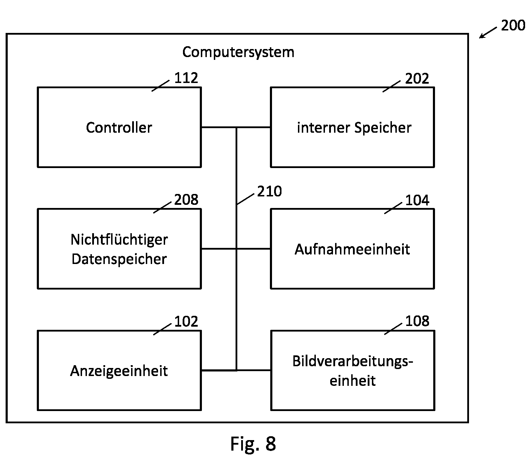

Die von der Kamera 114 erfassten Daten oder die durch die Bildverarbeitungseinheit 108 verarbeiteten, ausgewerteten Daten können von der Bildverarbeitungseinrichtung 108 an ein Computersystem 200 (siehe Fig. 8), insbesondere an einen Controller 112 des Computersystems 200 weitergeleitet werden. Der Controller 112 kann konfiguriert sein, um zumindest einen Objektdatensatz basierend auf den Daten zu bestimmen.

Der zumindest eine Objektdatensatz kann das Objekt 110, das zumindest eine Merkmal des Objekts 110, einen Standort des Systems 100, eine Zeitangabe, eine Wetterangabe, und/oder eine Temperaturangabe umfassen.

Der Controller 112 kann ferner dazu konfiguriert sein, den zumindest einen Objektdatensatz zu verschlüsseln und verschlüsselt in einem internen Speicher 202 des Systems 100, in einem externen Speicher 204 des Systems 100, in einem anderen externen Speicher (in Fig. 5 nicht dargestellt), und/oder in einem Netzwerkspeicher (in Fig. 5 nicht dargestellt) zu speichern und von dort wieder abzurufen. Der externe Speicher 204 kann bspw. einen Server 206 oder einen Cloud-Server umfassen.

Der Controller 112 ist ferner dazu konfiguriert, basierend auf dem Objektdatensatz Bildinformationen zu bestimmen und die Bildinformationen auf der Anzeigeeinheit 102 anzuzeigen.

Die Bildinformationen können auf Basis eines Vergleichs des Objektdatensatzes mit zumindest einem anderen Objektdatensatz bestimmt werden, wobei der Controller 112 konfiguriert ist, den zumindest einen Objektdatensatz oder zumindest einen Teil des Objektdatensatzes mit dem zumindest einen anderen Objektdatensatz oder mit zumindest einem Teil des zumindest einen anderen Objektdatensatzes zu vergleichen. Die Bildinformationen können auch auf Basis eines Vergleichs eines Hashwertes mit zumindest einem anderen Hashwert bestimmt werden, wobei der Controller 112 konfiguriert ist, den zumindest einen Hashwert mit dem zumindest einen anderen Hashwert zu vergleichen.

Der Controller 112 kann auch konfiguriert sein, um zu bestimmen, ob zumindest ein Teil des zumindest einen Objektdatensatzes mit zumindest einem Teil des zumindest einen anderen Objektdatensatzes übereinstimmt. Basierend auf dem Vergleich des zumindest einen Objektdatensatz mit dem zumindest einen anderen Objektdatensatz kann der Controller 112 die Bildinformationen bestimmen, die auf der Anzeigeeinheit 102 angezeigt werden sollen.

Für die Bestimmung der für die Benutzern der Ladesäule 124 interessanten Bildinformationen kann zunächst der Benutzer der Ladesäule 124 identifiziert werden. Der Benutzer kann beispielsweise direkt ermittelt werden, indem die Aufnahmeeinheit 104 den Benutzer als Person 118 erfasst und mittels der Bildverarbeitungseinheit 108 und dem Controller 112 durch einen Vergleich mit abgespeicherten Daten erkennt, wer die Person 118 ist.

Der Benutzer oder die Person 118 kann zusätzlich oder alternativ auch durch Abgleich von Merkmalen eines Fahrzeugs 116 oder Merkmalen eines Gegenstands 120 ermittelt werden. Beispielhaft soll im Folgenden die Identifizierung einer Person 118 auf Basis eines Merkmals eines Fahrzeugs 116 beschrieben werden.

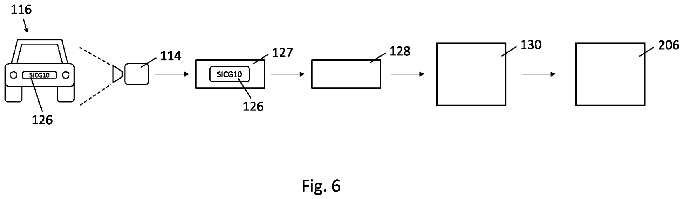

Fig. 6 zeigt eine schematische Darstellung zur Bestimmung eines Merkmals eines Fahrzeugs 116, insbesondere zur Bestimmung eines Nummernschilds 126, in einem Zeitpunkt gemäß einer Ausführungsform der Erfindung.

Um eine Person 118 eindeutig zu identifizieren, kann das Nummernschild 126, insbesondere das Kennzeichen des Fahrzeugs 116 gespeichert werden. Das Fahrzeug kann beispielsweise ein Auto sein, welches die Person 118 nutzt. Es wird folglich nicht die Person 118 eindeutig identifiziert, sondern nur das Fahrzeug 116 welches die Person 118 nutzt. Das Fahrzeug 116 kann als eindeutig zuweisbarer Identifikator der Person 118 angesehen werden.

Die Person 118 steuert mit ihrem Fahrzeug 116 einen Standort mit einer hierin beschriebenen Ladesäule 124 an. Die Aufnahmeeinheit 104, insbesondere die Kamera 114, erfasst das Fahrzeug 116 sobald sich das Fahrzeug 116 in dem Blickfeld 106 der Kamera 114 befindet. Insbesondere filmt oder fotografiert die Kamera 114 das Nummernschild 126 oder das Kennzeichen des Fahrzeugs 116. Die Kamera 114 kann versteckt, d.h. von außen nicht sichtbar, an der Ladesäule 124 angeordnet sein.

Die Daten welche die Kamera 114 aufnimmt, beispielsweise ein Bild 127 oder Videomaterial, werden zu keinem Zeitpunkt in der Ladesäule 124 oder auf einem externen Speicher 204, beispielsweise einem Server 206, zwischengespeichert.

Stattdessen können die Daten offline und in Echtzeit mittels eines zuvor trainierten neuronalen Netzwerks 128 ausgewertet und in Textform überführt werden. Das neuronale Netzwerk 128 kann mit einer Vielzahl von Trainingsdaten trainiert sein, um zuverlässig vordefinierte Merkmale oder Objekte 110 in den von der Kamera 114 aufgezeichneten Daten zu ermitteln.

Die Trainingsdaten können unterschiedliche Fahrzeuge 116 mit unterschiedlichen Nummernschildern 126 umfassen, um beispielsweise das neuronale Netzwerk 128 zu trainieren, um Nummernschilder 126 sicher zu erkennen. Das neuronale Netzwerk 128 kann auf einer dafür ausgelegten Hardware, beispielsweise Field Programmable Gate Array (FPGA) oder Google Coral ausgeführt werden. Auf dieser Hardware kann das Videomaterial oder das Bild 127 in Echtzeit ausgewertet und das Nummernschild 126, insbesondere das Kennzeichen des Fahrzeugs 116 in maschinenlesbare Textform umgewandelt werden. Es ist auch möglich, das Videomaterial oder das Bild 127 cloud-basiert (z.B. Google Vision API) auszuwerten, um die Merkmale eines Objekts 110 wie beispielsweise eine Marke, ein Modell und/oder ein Nummernschild eines Fahrzeugs 116 zu erkennen.

Das in maschinenlesbare Textform umgewandelte Kennzeichen des Fahrzeugs 116 kann anschließend mit Hilfe gängiger Verfahren, beispielsweise mit Hilfe einer Hash-Funktion 130 verschlüsselt werden. Die Hash-Funktion 130 kann beispielsweise eine Variante der kryptologischen Hash-Funktion 130 "Secure Hash Algorithm", SHA256, umfassen. Die Hash-Funktion 130 überführt das Kennzeichen des Fahrzeugs 116 in eine für jedes Kennzeichen eindeutige Kombination aus 256 Bits, welche dann an einen Server 206 gesendet und dort abgespeichert werden kann. Die verschlüsselten Daten des Kennzeichens bzw. die eindeutige Kombination aus 256 Bits des Kennzeichens kann als Hash oder Hashwert bezeichnet werden.

Vorteilhaft an dieser Vorgehensweise ist, dass der mittels der Hash-Funktion 130 verschlüsselte Hash nicht zurückübersetzbar und eindeutig ist. Dies bedeutet, dass aus dem Hash nicht wieder das unverschlüsselte Kennzeichen des Fahrzeugs 116 ermittelt werden kann. Dies führt dazu, dass die Kennzeichen der von der Aufnahmeeinheit 104 erfassten Fahrzeuge 116 datenschutzkonform gespeichert werden können. Datenschutzkonform bedeutet in diesem Zusammenhang, dass keine reale Zeichenfolge des Nummernschilds 126 abgespeichert wird und folglich nicht abgespeichert wird, welche Kennzeichen und welche Fahrzeuge 116 wirklich vor der Ladesäule 124 standen. Die auf den Servern 206 gespeicherten Hashs könne nur mit neu auf den Ladesäulen 124 generierten Hashs von Kennzeichen verglichen werden.

Da jedes Kennzeichen eines Fahrzeugs 116 eine eindeutige und immer gleiche Verschlüsselung erfährt, kann so festgestellt werden, ob das Fahrzeug 116 an verschiedenen Ladesäulen 124 stand bzw. ob das Fahrzeug 116 von Aufnahmeeinheiten 104 verschiedener Ladesäulen 124 erkannt wurde. Mit Hilfe des Systems 100 kann auch ermittelt werden wie lange und/oder wie oft das Fahrzeug 116 an einer jeweiligen Ladesäule 124 stand.

Zusätzlich kann eine Aktivität der Fahrzeuge 116 oder ein Verlauf der Fahrzeuge 116 datenschutzkonform gespeichert werden. Die Aktivität eines Fahrzeugs 116 kann beispielsweise eine Zeitdauer angeben, wie lange das Fahrzeug 116 an der jeweiligen Ladesäule 124 steht. Der Verlauf eines Fahrzeugs 116 kann beispielsweise angeben wie oft das Fahrzeug 116 an der jeweiligen Ladesäule 124 steht.

Desweitern kann über eine Segmentierung der einzelnen Teile des Kennzeichen des Fahrzeugs 116 auch Rückschlüsse auf die Herkunft des Fahrzeugs 116 geschlossen werden. Wird beispielsweise ein eigener Hash für einen Ortsteil (z.B. SI für Siegen) generiert und mit den auf dem Server 206 abgespeicherten Daten abgeglichen, können Statistiken über die Herkunft der Benutzer einer Ladesäule 124 ermittelt werden.

Die Standorte der Ladesäulen 124 können in einer Datenbank abgespeichert sein. Die Standorte können beispielsweise Kundenparkplätze von Unternehmen sein, insbesondere Kundenparkplätze von Gewerbeunternehmen. Beispielsweise können die Ladesäulen 124 auf Kundenparkplätzen von Bekleidungsgeschäften, Schuhgeschäften, Tierbedarfsgeschäften, Apotheken, Baumärkten und dergleichen positioniert sein. Durch die bekannten Standorte der Ladesäulen 124 kann auf die Interessen der Benutzer der Ladesäulen 124 geschlossen werden. Fährt beispielsweise eine Person 118 mit seinem Elektrofahrzeug 116 einmal oder mehrmals wöchentlich an eine Ladesäule 124 die vor einem Schuhgeschäft positioniert ist, so kann daraus abgeleitet werden, dass sich die Person 118 für Schuhe interessiert.

Die auf dem Server 206 zwischengespeicherten Hashs der Kennzeichen der Fahrzeuge 116 können mittels eines geeigneten Algorithmus, beispielsweise ein KI-AIgorithmus, ausgewertet werden. So kann beispielsweise aus einer Häufigkeit und einer Dauer wie lange ein Fahrzeug 116 an einer Ladesäule 124 steht, ein Nutzerprofil für das jeweilige Fahrzeug 116 und damit ein Nutzerprofil der Person 118 die das Fahrzeug 116 fährt, abgeleitet werden.

Je öfter ein Kennzeichen eines Fahrzeugs 116 von Ladesäulen 124 an verschiedenen Standorten gescannt oder erkannt wird, desto aussagekräftiger kann das Nutzerprofil der Person 118, die das Fahrzeug 116 mit dem Kennzeichen nutzt, ermittelt werden. Je aussagekräftiger das Nutzerprofil der Person 118 ist, desto besser können die Bildinformationen die dem Benutzer der Ladesäule 124 auf der Anzeigeeinheit 102 angezeigt werden sollen bestimmt werden.

Der KI-Algorithmus kann ein neuronales Netz umfassen. Das neuronale Netz zur Ermittlung eines Nutzerprofils kann eine Kombination aus einem "Long Short-Term Memory" (LSTM) neuronalem Netz und einem klassischen neuronalem Netz sein. Das LSTM kann eine Unterform eines "Recurrent Neural Networks (RNN)" sein und genutzt werden, um Muster in Datensequenzen zu erkennen und somit eine Verhaltensweise aus historischen Werten abzuschätzen. Das klassische neuronale Netz kann zur Auswertung von bisherigen Anlaufstellen, beispielsweise von bisherigen angefahrenen Ladesäulen 124 und der sich daraus ergebenden Interessen der Person 118, die das Fahrzeug 116 fährt, verwendet werden.

Fährt beispielsweise ein Fahrzeug 116 mit einem bereits hinterlegten, d.h. auf dem Server 206 abgespeicherten Hash an eine neue Ladesäule 124, so sendet die neue Ladesäule 124, insbesondere der Controller 112 der neuen Ladesäule 124 den Hash des erkannten Kennzeichens des Fahrzeugs 116 an den Server 206. Unter einer neuen Ladesäule 124 ist eine Ladesäule 124 zu verstehen, die das Fahrzeug 116 bzw. die Person 118 die das Fahrzeug 116 fährt zum ersten Mal angesteuert hat. Basierend auf einem bereits hinterlegten Nutzerprofil dieses Fahrzeugs 116 kann ein übergeordneter Algorithmus, beispielsweise ein KI-Algorithmus, ein Verhaltensmuster der Person 118 interpretieren und eine Segmentierung nach Interessen der Person 118 vornehmen.

Abhängig von dem aktuellen Standort der Ladesäule 124, können auf der Anzeigeeinheit 102 der Ladesäule 124 passende Bildinformationen, beispielsweise in Form von personalisierter Werbung, für den Benutzer der Ladesäule 124 bereitgestellt werden. Ergibt sich aus dem Nutzerprofil oder dem Verhaltensmuster der Person 118 beispielsweise, dass sich die Person 118 für Schuhe interessiert und befindet sich das Fahrzeug 116 der Person 118 an einer Ladesäule 124 vor einem Schuhgeschäft, so können der Person 118 beispielsweise Bildinformationen in Form von Werbung eines Schuhs, welcher gerade in dem Schuhgeschäft, vor dem die Ladesäule 124 positioniert ist, im Angebot ist auf dem Bildschirm der Ladesäule 124 angezeigt werden.

Durch eine Auswertung weiterer Merkmale wie beispielsweise ein Markenname des Fahrzeugs 116, ein Fahrzeugtyp des Fahrzeugs 116, eine Größe der Person 118, ein Geschlecht der Person 118, ein Alter der Person 118, eine Brille der Person 118 oder Kleidungsmerkmale der Person 118, können weitere spezifische Nutzerprofile der Person 118 generiert werden. Somit kann das Nutzerprofil der Person 118 noch weiter optimiert und die Bildinformationen in Form von Werbung noch besser personalisiert werden. Diese weiteren Merkmale lassen sich ebenfalls offline durch das hierin beschriebene System 100 analysieren und verschlüsselt abspeichern, sodass auch für diese weiteren Merkmale Datenschutzanforderungen gewährleistet sind.

Die personalisierte Werbung kann somit auf das Fahrzeug 116 und den Fahrer 118 angepasst werden. Durch eine automatisierte Auswertung von verfügbaren Werbeanzeigen und einem erstellte Nutzerprofil kann personalisierte Werbung generiert werden. Durch das hierin beschriebene System 100 können offline Verhaltensmuster von Kunden oder Benutzern von Ladesäulen 124 abgespeichert und analysiert werden.

Das hierin beschriebene System 100 ist konfiguriert, um ein offline Nutzerprofil von Personen 118 anhand eines Objekts 110, beispielsweise anhand eines Fahrzeugs 116, und ohne direktes Speichern von Daten zu erstellen. Zur Erstellung des Nutzerprofils einer Person 118 werden Merkmale wie beispielsweise das Kennzeichen eines der Person 118 zugeordneten Fahrzeugs 116 sowie Aufenthaltsort, Aufenthaltszeit, etc. genutzt. Das Nutzerprofil kann genutzt werden, um für die Person 118 passende personalisierte Werbung als Bildinformationen auf einer Anzeigeeinheit 102 des hierin beschriebenen Systems 100 anzuzeigen.

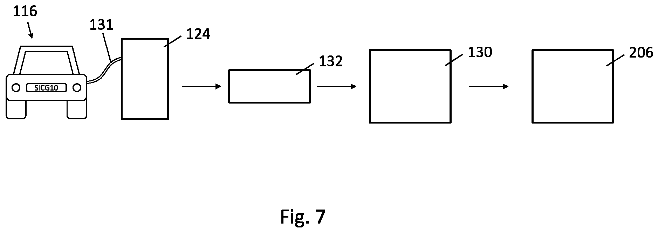

Fig. 7 zeigt eine weitere schematische Darstellung zur Bestimmung eines Merkmals eines Fahrzeugs 116 in einem Zeitpunkt gemäß einer Ausführungsform der Erfindung.

Um eine Person 118 oder einen Benutzer eines hierin beschriebenen Systems 100, insbesondere einer Ladesäule 124, eindeutig zu identifizieren, kann das Fahrzeug 116 der Person 118 oder des Benutzers erkannt werden. Es wird folglich nicht die Person 118 oder der Benutzer eindeutig identifiziert, sondern nur das Fahrzeug 116 welches die Person 118 nutzt. Das Fahrzeug 116 kann als eindeutig zuweisbarer Identifikator der Person 118 oder des Benutzers angesehen werden.

Der Person 118 steuert mit ihrem Fahrzeug 116 einen Standort mit einer hierin beschriebenen Ladesäule 124 an. Das System 100, insbesondere die Ladesäule 124, kann auf Basis eines Kommunikationsprotokolls OCPP (Open Share Point Protocol) bezüglich aller Punkte kommunizieren, welche mit dem Thema Laden zu tun haben. Auf Basis dieses Kommunikationsprotokolls kann sämtliche Kommunikation zwischen einem Backend, beispielsweise einer Abrechnungsdienstleistung, oder auch mit dem Fahrzeug 116 selbst beruhen. In diesem Kommunikationsprotokoll kann eine Plug&Charge Kompatibilität enthalten sein. So können beispielsweise Kartendaten einer Roaming RFID Karten direkt mit dem Fahrzeug 116 gekoppelt werden, beispielsweise durch Abspeichern der Kartendaten in dem Fahrzeug 116.

Die Person 118 oder der Benutzer der Ladesäule 124 muss nur sein Fahrzeug 116 mit der Ladesäule 124 mittels der Verbindungseinheit 131 anschließen, insbesondere mit einem Ladekabel, um einen Ladevorgang des Fahrzeugs 116 zu starten. Die RFID Kartendaten werden dann mittels OCPP an die Ladesäule 124 übertragen, ohne dass die Person 116 sich mit einer RFID Karte an der Ladesäule 124 separat anmelden muss.

Auf Basis dieser Kommunikation kann auch eine Fahrzeug-Identifikationsnummer oder Vehicle Identification Number (VIN) übertragen werden. In der Fahrzeug-Identifikationsnummer können auch Daten wie Marke, Modell, Fahrzeugtyp, Baujahr, Ausstattung oder Farbe des Fahrzeugs 116 hinterlegt sein. Die Fahrzeug-Identifikationsnummer ist eindeutig einem Fahrzeug 116 zugeordnet. Aus dem Kommunikationsprotokoll (OCPP) von Fahrzeug 116 und Ladesäule kann mittels eines Algorithmus ein Zertifikat des Fahrzeugs 116 und somit die Fahrzeug-Identifikationsnummer (VIN) des Fahrzeugs 116 ausgelesen werden. Aus der VIN können mittels der Auswerteeinheit 132, insbesondere durch einen KI-gestützten Algorithmus, Identifikationsmerkmale (Marke, Modell, Farbe, Baujahr, Ausstattung, etc.) des Fahrzeugs 116 ausgewertet werden.

Die Daten oder Merkmale können in maschinenlesbare Textform ermittelt werden. Die Daten oder Merkmale können mit Hilfe gängiger Verfahren, beispielsweise mit Hilfe einer Hash-Funktion 130 verschlüsselt werden. Die Hash-Funktion 130 kann beispielsweise eine Variante der kryptologischen Hash-Funktion 130 "Secure Hash Algorithm", SHA256, umfassen. Die Hash-Funktion 130 kann die in maschinenlesbarer Textform ermittelten Daten oder Merkmale des Fahrzeugs 116 in eine jeweils eindeutige Kombination aus 256 Bits überführen, welche dann an einen Server 206 gesendet und dort abgespeichert werden können. Die verschlüsselten Daten oder Merkmale bzw. die eindeutige Kombination aus 256 Bits der Daten oder Merkmale können als Hash oder Hashwert bezeichnet werden.

Zur Erstellung eines Nutzerprofils eines Benutzers der Ladesäule 124 können die Informationen über beispielsweise Marke, Modell, Fahrzeugtyp, Baujahr, Ausstattung oder Farbe des Fahrzeugs 116 basierend auf der Fahrzeug-Identifikationsnummer direkt verwendet werden und ein persönlicher Teil wie beispielsweise das Kennzeichen des Fahrzeugs 116 durch eine Erkennung des Kennzeichens mittels der hierin beschriebenen Aufnahmeeinheit 104 und der Bildverarbeitungseinheit 108 verwendet werden.

Relevante Daten und Merkmale eines Fahrzeugs 116 können somit auf zweierlei Arten ermittelt werden. Einerseits mittels einer Aufnahmeeinheit 104 und einer Bildverarbeitungseinheit 108 und/oder andererseits mittels einer Verbindungseinheit 131 und einer Auswerteeinheit 132.

Die so erlangten Daten, insbesondere Marke und Modell des Fahrzeugs 116, können genutzt werden, um Kunden oder Benutzern der Ladesäule 124 direkt auf der Anzeigeeinheit 102, insbesondere einem Bildschirm der Ladesäule, Werbung anzeigen zu können. Zusätzlich zu den erlangten Daten können Zusatzinformationen, beispielsweise über beworbene Produkte, Lademuster des Kunden, etc., verwendet werden, um mittels eines Modells (beispielsweise ein AI (artificial intelligence) basierendes Language Modell) Werbung zu generieren und auf der Anzeigeeinheit 102 anzuzeigen. Die Werbung kann Bildinformationen von konkurrierenden Marken anderer Hersteller umfassen.

Die in Fig. 6 beschriebenen Vorteile und weiteren Ausführungen gelten für das Ausführungsbeispiel der Fig. 7 entsprechend.

Fig. 8 zeigt eine schematische Darstellung eines Computersystems 200 gemäß einer Ausführungsform der Erfindung. Das Computersystem 200 kann einen Controller 112, einen internen Speicher 202 und einen nichtflüchtigen Datenspeicher 208 umfassen. Ferner kann das Computersystem 200 eine Aufnahmeeinheit 104, eine Anzeigeeinheit 102 und eine Bildverarbeitungseinheit 108 umfassen.

Der Controller 112 kann Anweisungen ausführen, die im internen Speicher 202 bereitgestellt werden. Der nichtflüchtige Datenspeicher 208 kann ein Computerprogramm speichern, einschließlich der Anweisungen, die an den internen Speicher 202 übertragen und dann von dem Controller 112 ausgeführt werden können.

Der Controller 112, der interne Speicher 202 und der nichtflüchtige Datenspeicher 208 können miteinander verbunden sein, beispielsweise über eine elektrische Verbindung 210, wie z.B. über ein Kabel oder einen Computerbus oder über eine andere geeignete elektrische Verbindung 210 zum Austausch elektrischer Signale. Der Controller 112, der interne Speicher 202 und der nichtflüchtige Datenspeicher 208 können auch drahtlos miteinander verbunden sein. Die drahtlose Verbindung kann insbesondere eine Funkverbindung sein. Die Anzeigeeinheit 102, die Aufnahmeeinheit 104 und die Bildverarbeitungseinheit 108 können mit dem Computersystem 200 verbunden sein, oder können Teile des Computersystems 200 sein. Die Anzeigeeinheit 102, die Aufnahmeeinheit 104 und die Bildverarbeitungseinheit 108 können intern mit dem Computersystem 200 über die elektrische Verbindung 210 verbunden sein.

Es versteht sich, dass das, was für das oben genannten System 100 beschrieben wurde, analog auch für das Computersystem 200 gelten kann.

### Bezugszeichenliste

- 100: System
- 102: Anzeigeeinheit
- 104: Aufnahmeeinheit
- 106: Blickfeld
- 108: Bildverarbeitungseinheit
- 110: Objekt
- 112: Controller
- 114: Kamera
- 116: Fahrzeug
- 118: Person
- 120: Gegenstand
- 122: Leuchteinheit
- 124: Ladesäule
- 126: Nummernschild
- 127: Bild
- 128: neuronales Netzwerk
- 130: Hash-Funktion
- 131: Verbindungseinheit
- 132: Auswerteeinheit

- 200: Computersystem
- 202: interner Speicher
- 204: externer Speicher
- 206: Server
- 208: nichtflüchtiger Datenspeicher
- 210: elektrische Verbindung

## Patentansprüche

1. System (100), insbesondere ein Ladesystem zum Laden eines Elektrofahrzeugs, zur Bestimmung von Bildinformationen, umfassend:
eine Anzeigeeinheit (102), konfiguriert, um Bildinformationen anzuzeigen;
eine Aufnahmeeinheit (104), angeordnet und konfiguriert, um Daten in einem Blickfeld (106) der Aufnahmeeinheit (104), insbesondere vor der Anzeigeeinheit (102) zu erfassen und abzuspeichern;
eine Bildverarbeitungseinheit (108), konfiguriert um die Daten der Aufnahmeeinheit (104) zu empfangen und zumindest ein Objekt (110) basierend auf den Daten in dem Blickfeld (106) der Aufnahmeeinheit (104) zu bestimmen;
einen Controller (112), der mit der Anzeigeeinheit (102), der Aufnahmeeinheit (104) und der Bildverarbeitungseinheit (108) verbunden und dazu konfiguriert ist, basierend auf dem zumindest einen Objekt (110) die Bildinformationen zu bestimmen und auf der Anzeigeeinheit (102) anzuzeigen.

2. System (100) nach Anspruch 1,
wobei die Aufnahmeeinheit (104) auf eine Umgebung, insbesondere auf das Objekt (110) vor der Anzeigeeinheit (102) ausrichtbar ist, und/oder wobei die Aufnahmeeinheit (104) eine Kamera (114) umfasst,
wobei die Aufnahmeeinheit (104) insbesondere zumindest zwei Kameras (114) umfasst, bevorzugt drei Kameras (114) oder mehr als drei Kameras (114), und/oder
wobei die Aufnahmeeinheit (104) an einem Rand der Anzeigeeinheit (102) angeordnet ist.

3. System (100) nach einem der vorstehenden Ansprüche,
wobei die Bildverarbeitungseinheit (108) konfiguriert ist, das zumindest eine Objekt (110) mittels einer Daten-Extraktionstechnik zu bestimmen und/oder mittels einer Hash-Funktion (130) zu verschlüsseln, und/oder wobei die Bildverarbeitungseinheit (108) konfiguriert ist, die Daten der Aufnahmeeinheit (104) an ein Computersystem (200) weiterzuleiten, und/oder wobei die Bildverarbeitungseinheit (108) konfiguriert ist, zumindest ein Merkmal des zumindest einen Objekts (110) zu bestimmen,
wobei das zumindest eine Merkmal insbesondere ein Nummernschild eines Fahrzeugs (116), einen Markenname eines Fahrzeugs (116), einen Fahrzeugtyp, eine Größe einer Person (118), ein Geschlecht einer Person (118), ein Alter einer Person (118), eine Brille einer Person (118) und/oder Kleidungsmerkmale einer Person (118) umfasst.

4. System (100) nach einem der vorstehenden Ansprüche,
wobei das zumindest eine Objekt (110) ein Fahrzeug (116), eine oder mehrere Personen (118), und/oder einen Gegenstand (120) umfasst.

5. System (100), insbesondere ein Ladesystem bspw. zum Laden eines Elektrofahrzeugs, zur Bestimmung von Bildinformationen, umfassend:
eine Anzeigeeinheit (102), konfiguriert, um Bildinformationen anzuzeigen;
eine Verbindungseinheit (131), konfiguriert, um das System (100) mit einem Objekt (110) zu verbinden und Daten von dem Objekt (110) an das System (100) zu übertragen;
eine Auswerteeinheit (132), konfiguriert, um die Daten zu empfangen und das Objekt (110) basierend auf den Daten zu bestimmen;
einen Controller (112), der mit der Anzeigeeinheit (102) und der Auswerteeinheit (132) verbunden und dazu konfiguriert ist, basierend auf dem Objekt (110) die Bildinformationen zu bestimmen und auf der Anzeigeeinheit (102) anzuzeigen.

6. System (100) nach Anspruch 5,
wobei die Auswerteeinheit (132) konfiguriert ist, zumindest ein Merkmal des Objekts (110) zu bestimmen,
wobei das zumindest eine Merkmal insbesondere einen Markenname eines Fahrzeugs (116), ein Modell eines Fahrzeugs (116), einen Fahrzeugtyp eines Fahrzeugs (116), ein Baujahr eines Fahrzeugs (116), eine Ausstattung eines Fahrzeugs (116) und/oder eine Farbe eines Fahrzeugs (116) umfasst.

7. System (100) nach einem der vorstehenden Ansprüche,
wobei die Anzeigeeinheit (102) einen Bildschirm umfasst, und/oder wobei die Anzeigeeinheit (102) konfiguriert ist, um Bildinformationen anzuzeigen, die eine Werbung, eine Werbung eingebettet in einen Film, eine Werbung eingebettet in einem Video, eine Werbung eingebettet in einem Sportprogramm, eine Werbung eingebettet in einem Spielprogramm, eine Werbung eingebettet in einem Fernsehprogramm, eine Werbung eingebettet in einer Nachricht, eine Werbung eingebettet in einer Internet-Seite, und/oder eine Werbung eingebettet in anderen Bildinformationen umfassen, und/oder
wobei die Anzeigeeinheit (102) konfiguriert ist, um Bildinformationen anzuzeigen, die Informationen aus dem Internet, Informationen aus einer App, Informationen von einem Speichermedium, Videos, Filme, Sportprogramme, Spielprogramme, Nachrichten und/oder Informationen über lokale Einrichtungen umfassen.

8. System (100) nach einem der vorstehenden Ansprüche,
wobei der Controller (112) drahtlos oder drahtgebunden mit der Anzeigeeinheit (102), der Aufnahmeeinheit (104), der Bildverarbeitungseinheit (108) und der Auswerteeinheit (132) verbunden ist, und/oder wobei der Controller (112) konfiguriert ist, zumindest einen Objektdatensatz zu bestimmen,
wobei der zumindest eine Objektdatensatz das Objekt (110) insbesondere das zumindest eine Merkmal, einen Standort des Systems (100), eine Zeitangabe, eine Wetterangabe, und/oder eine Temperaturangabe umfasst, wobei der Controller (112) konfiguriert ist, den zumindest einen Objektdatensatz zu verschlüsseln, und/oder
wobei der Controller (112) konfiguriert ist, den zumindest einen Objektdatensatz verschlüsselt zu speichern, und/oder
wobei der Controller (112) konfiguriert ist, den zumindest einen Objektdatensatz mit zumindest einem anderen Objektdatensatz zu vergleichen, wobei der Controller (112) insbesondere konfiguriert ist zu bestimmen, ob zumindest ein Teil des zumindest einen Objektdatensatzes mit zumindest einem Teil des zumindest einen anderen Objektdatensatzes übereinstimmt, wobei der Controller (112) insbesondere konfiguriert ist, basierend auf dem Vergleich des zumindest einen Objektdatensatz mit dem zumindest einen anderen Objektdatensatz die Bildinformationen zu bestimmen und auf der Anzeigeeinheit (102) anzuzeigen,
wobei der zumindest eine andere Objektdatensatz insbesondere in einem internen Speicher (202) des Systems (100), in einem externen Speicher (204) des Systems (100), in einem anderen externen Speicher (204), und/oder in einem Netzwerkspeicher gespeichert und von dort mittels des Controllers (112) abrufbar ist.

9. System (100) nach einem der der vorstehenden Ansprüche, ferner umfassend:
einen internen Speicher (202),
wobei der Controller (112) konfiguriert ist, den zumindest einen Objektdatensatz in dem internen Speicher (202) zu speichern, und/oder
einen externen Speicher (204),
wobei der Controller (112) konfiguriert ist, den zumindest einen Objektdatensatz in dem externen Speicher (204) zu speichern,
wobei der externe Speicher (204) insbesondere ein Server (206) oder ein Cloud-Server ist,
wobei der Controller (112) insbesondere drahtlos oder drahtgebunden mit dem internen Speicher (202) und/oder dem externen Speicher (204) verbunden ist,
wobei der Controller (112) insbesondere konfiguriert ist, den zumindest einen Objektdatensatz von dem externer Speicher (204) mittels einer Datenverbindung abzurufen,
wobei die Datenverbindung insbesondere eine Funkverbindung, insbesondere eine Mobilfunkverbindung oder eine Kabelverbindung ist.

10. System (100) nach einem der vorstehenden Ansprüche,
wobei der Controller (112) konfiguriert ist, eine Zahlung auszulösen, wenn die Bildinformationen bestimmt und auf der Anzeigeeinheit (102) angezeigt wurden,
wobei der Controller (112) insbesondere konfiguriert ist, eine Zahlung auszulösen, wenn die auf der Anzeigeeinheit (102) angezeigten Bildinformationen eine Werbung, einen Film, ein Video, ein Sportprogramm, ein Spielprogramm, einen vorgegebenen Inhalte umfassen.

11. System (100) nach einem der vorstehenden Ansprüche,
wobei das System (100) eine Ladesäule (124) umfasst, die mit AC-Strom und/oder mit DC-Strom betreibbar ist,
wobei die Anzeigeeinheit (102), insbesondere ein Bildschirm, direkt, indirekt bzw. drahtlos an der Ladesäule (124) angeschlossen ist.

12. System (100) nach einem der vorstehenden Ansprüche, ferner umfassend:
eine Leuchteinheit (122), konfiguriert, um einen Status des Systems (100) anzuzeigen,
wobei die Leuchteinheit (122) insbesondere als Lichtstreifen ausgebildet ist, wobei die Leuchteinheit (122) insbesondere ausgebildet ist elektromagnetische Strahlung mit unterschiedlicher Wellenlänge zu emittieren,
wobei die Leuchteinheit (122) insbesondere an einem oberen Rand und/oder an einem unteren Rand des Systems (100), insbesondere an einer Ladesäule (124) angeordnet ist,
wobei die Leuchteinheit (122) insbesondere zumindest abschnittsweise umlaufend an dem System (100), insbesondere an einer Ladesäule (124) angeordnet ist.

13. Netzwerk mit mehreren Systemen (100) nach einem der vorstehenden Ansprüche,
wobei die Systeme (100) an verschiedenen Standorten angeordnet sind und mit einem Server (206) oder Cloud-Server verbunden sind.

14. Nichtflüchtiger Datenspeicher (208), konfiguriert um Anweisungen des Controllers (112) zu speichern für eine Steuerung des Systems (100) nach einem der Ansprüche 1 bis 12.

15. Computersystem (200), umfassend
einen nichtflüchtigen Datenspeicher (208) nach Anspruch 14, und das System (100) nach einem der Ansprüche 1 bis 12.

16. Verfahren zur Bestimmung von Bildinformationen, umfassend:
Erfassen und Abspeichern von Daten in einem Blickfeld (106) einer Aufnahmeeinheit (104), insbesondere vor einer Anzeigeeinheit (102);
Bestimmen von zumindest einem Objekt (110) basierend auf den Daten in dem Blickfeld (106) der Aufnahmeeinheit (104);
Bestimmen von Bildinformationen basierend auf dem zumindest einen Objekt (110); und
Anzeigen der Bildinformationen auf der Anzeigeeinheit (102).

17. Verfahren zur Bestimmung von Bildinformationen, umfassend:
Verbinden eines Systems (100) zur Bestimmung von Bildinformationen nach einem der Ansprüche 5 bis 12 mit einem Objekt (110);
Empfangen von Daten von dem Objekt (110);
Bestimmen des Objekts (110) basierend auf den Daten;
Bestimmen von Bildinformationen basierend auf dem Objekt (110); und
Anzeigen der Bildinformationen auf der Anzeigeeinheit (102).
